# EUROPÄISCHE PATENTSCHRIFT

(11) **EP 2 574 261 B1**
(45) Veröffentlichungstag und Bekanntmachung des Hinweises auf die Patenterteilung: **22.06.2016**
(21) Anmeldenummer: 12185996.1
(22) Anmeldetag: 26.09.2012
(51) Int. Cl.: A47J 27/00, A47J 43/07

(54) **Verfahren zur benutzerdefinierten Freischaltung einer elektrischen Küchenmaschine sowie elektrisch betriebene Küchenmaschine**
Method for a user-defined activation of an electric kitchen appliance and electrically operated kitchen appliance
Procédé de déconnexion définie par l'utilisateur d'une machine de cuisine électrique et machine de cuisine à fonctionnement électrique

(30) Priorität: 27.09.2011 DE 102011053990
(43) Veröffentlichungstag der Anmeldung: 03.04.2013
(73) Patentinhaber: Vorwerk & Co. Interholding GmbH, 42275 Wuppertal (DE)
(72) Erfinder: Caldewey, Uwe, 44229 Dortmund (DE); Kemker, Uwe, 42105 Wuppertal (DE); Brech, Oliver, 59379 Selm (DE); Schomacher, Jutta, 42489 Wülfrath (DE); Lang, Torsten, 42657 Solingen (DE)
(74) Vertreter: Müller, Enno

(56) Entgegenhaltungen:
- DE-A1- 4 414 823
- DE-A1-102005 040 525
- DE-A1-102010 060 650
- FR-A1- 2 820 020
- US-A1- 2002 027 175

## Beschreibung

Die Erfindung betrifft ein Verfahren zur benutzerdefinierten Freischaltung einer elektrischen Küchenmaschine, wobei zur Freischaltung ein Code einzugeben ist und die Küchenmaschine ein Touch-Display sowie mechanisch zu betätigende Schalter, wie Drehschalter oder Taster, aufweist.

Verfahren der in Rede stehenden Art sind bekannt. Mittels dieser kann ein personenbezogener Zugriff bzw. eine Deaktivierung der Küchenmaschine oder Funktionen derselben erreicht werden. So kann weiter die Küchenmaschine vor unberechtigtem Zugriff geschützt werden. Zur Freischaltung der Küchenmaschine ist durch den Benutzer ein Code einzugeben, der die Freischaltung der Küchenmaschine oder zumindest die Freischaltung von Funktionsbereichen derselben auslöst. Küchenmaschinen der in Rede stehenden Art sind bekannt. Diese finden insbesondere Verwendung im Haushaltsbereich.

Eine solche Küchenmaschine weist insbesondere mechanisch zu betätigende Schalter, wie Drehschalter oder Taster, darüber hinaus ggf. auch Schiebeschalter auf, weiter bevorzugt zur Einstellung unterschiedlicher Parameter der Küchenmaschine. Darüber hinaus ist diesbezüglich bekannt, die Küchenmaschine mit einem Touch-Display auszubilden, so bspw. zum Aufruf abgespeicherter Rezepte oder dergleichen.

Zum Stand der Technik ist etwa auf die US 2002/027175 A1 und DE 10 2010 060650 A1 zu verweisen.

Ausgehend von dem genannten Stand der Technik stellt sich die Erfindung die Aufgabe, ein vorteilhaftes Verfahren der genannten Art anzugeben.

Diese Aufgabe ist beim Gegenstand des Anspruches 1 gelöst, wobei darauf abgestellt ist, dass der Code sowohl unter Nutzung des Touch-Displays wie auch eines oder mehrerer Schalter eingegeben werden muss, wobei die Küchenmaschine insgesamt oder ein Motor der Küchenmaschine unabhängig von dem durch den eingegebenen Code gewählten Benutzerprofil deaktiviert werden kann.

Zufolge der vorgeschlagenen Lösung ist ein verbessertes Verfahren der in Rede stehenden Art erreicht. Zur Code-Eingabe werden bevorzugt ohnehin zum Betrieb der Küchenmaschine vorgesehene Komponenten genutzt. Es sind keine ausschließlich für die Code-Eingabe vorzusehende Schalter oder dergleichen, weiter bspw. eine Tastatur oder dergleichen nötig. Die Küchenmaschine steht hierbei nach einem Einschalten derselben, d.h. nach Betätigung eines Netzschalters oder dergleichen bzw. nach Verbinden der Küchenmaschine mit dem elektrischen Haushaltsnetz zur Eingabe des Codes zur Verfügung.

In dieser Betriebsstellung der Küchenmaschine ist das HMI (Human-Machine-Interface) aktiviert. Die Freigabe bzw. die eingeschränkte Freigabe der Küchenmaschine erfolgt nach Eingabe des Codes.

Hierzu ist bevorzugt eine Eingabe des Codes sowohl unter Nutzung des Touch-Displays als auch eines oder mehrerer der Schalter vorgesehen, wobei weiter bevorzugt bzgl. des Touch-Displays auf diesem unterschiedliche Berührungsbereiche generiert sein können.

Bezüglich der mechanischen Schalter ist die Code-Eingabe allein durch Betätigen des Schalters erreichbar, darüber hinaus, wie weiter bevorzugt, in Abhängigkeit von der erreichten Schalterstellung bei Bedienung durch den Benutzer.

In der Küchenmaschine sind bevorzugt unterschiedliche Codes zur Definierung von Benutzerprofilen hinterlegt. Hierzu ist weiter bevorzugt ein nicht flüchtiger Speicher vorgesehen. Bei Übereinstimmung eines über das Touch-Display und einen oder mehreren Schalter einzugebenden Codes mit einem der hinterlegten Codes wird ein entsprechendes Benutzerprofil aktiviert, dies weiter entsprechend bevorzugt zur vollständigen Freigabe der Küchenmaschine oder zur beschränkten Freigabe derselben.

Der einzugebende Code unterscheidet sich hierbei weiter bevorzugt auch bzgl. der Reihenfolge der zur Code-Eingabe zu bedienenden Flächen des Touch-Displays und der Schalter. Es ist entsprechend weiter bevorzugt eine beliebig festlegbare Kombination von Stellelemente-Folgen möglich.

Das Ausschalten eines Motors der Küchenmaschine und/oder der gesamten Küchenmaschine ist bevorzugt jederzeit möglich. Diese Funktion ist vom Benutzer zufolge entsprechender Code-Eingabe und/oder Benutzerprofiländerung nicht deaktivierbar. Somit ist sichergestellt, dass insbesondere in Notfällen, bspw. bei Fehlfunktionen, ein Ausschalten insbesondere des Motors, darüber hinaus der gesamten Küchenmaschine ermöglicht ist.

Das jedem einzugebenden und hinterlegten Code zugeordnete Benutzerprofil ist weiter bevorzugt unter Nutzung von Administrator-Rechten angelegt bzw. anlegbar, darüber hinaus bevorzugt auch editierbar. In einem derartigen Benutzerprofil können einzelne oder mehrere Stellelemente wie Schalter oder dergleichen gesperrt sein. Darüber hinaus ist bevorzugt in dem jeweiligen Benutzerprofil ein Design der Benutzeroberfläche, insbesondere des Touch-Displays hinterlegt.

Es ist bevorzugt vorgesehen, dass die Küchenmaschine ein Rührwerk mit einer einstellbaren Drehzahl und eine Heizeinrichtung mit einer einstellbaren Heiztemperatur und eine wählbare Zeiteinstellung aufweist und dass die benutzerdefinierte Einstellung jedenfalls eine Beschränkung des möglichen Drehzahlbereiches und/oder der möglichen Heiztemperatur beinhaltet. Das Rührwerk sowie die Heizeinrichtung der Küchenmaschine sind bevorzugt elektrisch betätigbare Einrichtungen derselben. Sowohl das Rührwerk als auch die Heizeinrichtung sind bevorzugt über Schalter, wie bspw. Drehschalter oder Taster, hinsichtlich der Drehzahl bzw. hinsichtlich der Heiztemperatur einstellbar, darüber hinaus alternativ, weiter bevorzugt kombinativ auch über entsprechend generierte Schaltflächen des Touch-Displays. Insbesondere die elektrische Heizung der Küchenmaschine ist in bevorzugter Ausgestaltung nur in Verbindung mit einer Zeiteinstellung nutzbar. Das über die Code-Eingabe freigegebene Benutzerprofil beinhaltet bevorzugt neben weiteren Parametern ggf. auch eine Beschränkung des möglichen Drehzahlbereiches und/oder der möglichen Heiztemperatur, so dass bspw. mit Eingabe eines Codes lediglich Drehzahlen des Rührwerkes im niedrigen Drehzahlbereich, bspw. bis hin zu 500 oder 1.000 U/min. erreichbar sind. Bezüglich der ggf. beschränkten Heiztemperatur sind in Abhängigkeit von der Code-Eingabe und des hierbei entsprechend freigegebenen Benutzerprofils bspw. nur Heiztemperaturen bis hin zu 40°C oder 60°C einstellbar. Entsprechend sind mit einem zugewiesenen Code und einem entsprechend zugewiesenen Benutzerprofil Einschränkungen zur Nutzung der Küchenmaschine bspw. für Kinder ermöglicht. Generell kann die Code-Eingabe zur Kindersicherung genutzt werden. Es besteht zufolge der vorbeschriebenen Lösung entsprechend auch die Möglichkeit, bspw. Kindern einen gewissen Code zuzuordnen, weiter entsprechend ein gewisses Benutzerprofil, woraufhin eine eingeschränkte Nutzung der Küchenmaschine auch für Kinder erlaubt ist, bspw. lediglich die Nutzung der Küchenmaschine als Mixer oder als Aufheizgerät, darüber hinaus zur Nutzung des Gerätes in einer Kombination von Mixen und Aufheizen, dies bei eingeschränkten Parametern. So können weiter mit einer Benutzerkontenverwaltung bspw. auf unterschiedliche Familienmitglieder zugeschnittene Freigaben von Parametern für die einstellbare Drehzahl und/oder Heiztemperatur zugeordnet werden. Auch ist diesbezüglich eine Beschränkung der Zeiteinstellung möglich, bspw. die Nutzung der Küchenmaschine bzw. die Aktivierung von Rührwerk und/oder Heizeinrichtung über einen Zeitraum von nur 5 bis 10 Minuten.

Bevorzugt wird weiter, dass die Küchenmaschine aus einem Speicher abrufbare Rezepte aufweist und dass das Benutzerprofil eine Beschränkung der abrufbaren Rezepte beinhaltet. Die in dem Speicher abrufbaren Rezepte sind bevorzugt auf dem Touch-Display abbildbar, weiter bevorzugt mit entsprechenden Bearbeitungshinweisen, wie insbesondere Mengen zuzugebender Zutaten und/oder Einstellungen hinsichtlich der Rührwerkdrehzahl und/oder der Heiztemperatur und/oder der Zeit. Zufolge des in Abhängigkeit von dem eingegebenen Code gewählten Benutzerprofils werden bevorzugt dem Benutzerprofil zugeordnete Rezepte aufgerufen, alternativ alle Rezepte. So werden bevorzugt einem Benutzerprofil favorisierte Rezepte zugeordnet. Solche favorisierten Rezepte können durch den Benutzer bei entsprechender Berechtigung mit in das Benutzerprofil eingespeichert werden. Auch ist hierdurch eine beschränkte Eingabe von Rezepten ermöglicht, die auf eine beschränkte Ernährungsproblematik hin zugeschnitten sind. So werden bspw. für Benutzer, die auf bestimmte Lebensmittel allergisch reagieren, nach Eingabe des dem Benutzer zugeordneten Codes und entsprechendem Aufruf der hierzu hinterlegten Rezepte insbesondere nur solche auf dem Touch-Display angezeigt, die die betreffenden Allergene nicht aufweisen, so weiter bspw. Rezepte, die keine Eier und/oder Milch und/oder Gluten und/oder Nüsse aufweisen.

Auch ist bevorzugt, dass ein Benutzerprofil eine Beschränkung auf eine Betriebsart aus einer Auswahl von mehreren Betriebsarten, bspw. auf eine Waagefunktion, beinhaltet. Im Falle einer Waagefunktion ist unter Eingabe eines entsprechenden Codes die Küchenmaschine bspw. allein als Waage nutzbar. Bevorzugt sind dann weder das Rührwerk noch die Heizung aktivierbar. Auch eine benutzerprofilseitige Beschränkung auf mehrere Betriebsarten, bspw. eine Einschränkung auf eine Waagefunktion und auf die Heizfunktion, weiter ggf. unter Einschränkung der höchsten Heiztemperatur, ist diesbezüglich möglich.

Zudem ist bevorzugt, dass im Betrieb der Küchenmaschine mit einer gewählten Kombination aus Heizungs- und/oder Drehzahleinstellung und/oder Zeitvorwahl eine Aktivierung oder Änderung des Benutzerprofils vorgenommen werden kann. So ist insbesondere während des Betriebs der Küchenmaschine unter Eingabe eines neuen Codes die Funktion der Küchenmaschine erweiterbar oder auch weiter einschränkbar. Hierdurch kann weiter bspw. insbesondere bei zeitintensiven Gar- oder Kochprozessen unter Nutzung der Küchenmaschine diese quasi für den Zugang weiterer Personen gesperrt werden, indem durch Eingabe eines quasi Sperrcodes ein oder mehrere Schalter zur Parametereinstellung der Rührwerkdrehzahl und/oder Heiztemperatur und/oder Zeitvorgabe deaktiviert werden. Diese Deaktivierung ist bevorzugt nur durch erneute Eingabe eines vorbestimmten Codes deaktivierbar.

Zufolge eines oder mehrerer der vorbeschrieben Merkmale ist ein Verfahren angegeben, bei welchem der Zugriff bzw. die Aktivierung der Küchenmaschine bevorzugt personenbezogen freigegeben werden kann. Die Küchenmaschine ist bevorzugt vor unberechtigtem Zugriff geschützt, wobei unterschiedliche Anwender durch anwenderspezifische Zugangscodes unterschieden werden. Somit ist bevorzugt jedem Anwender auch ein spezifisches Benutzerprofil zugeordnet. Darüber hinaus ist bevorzugt auch vorgesehen, dass ein Anwender mehrere Profile mit unterschiedlichen Zugangscodes anlegen kann. Bevorzugt dient das vorgeschlagene Verfahren als Kindersicherung und/oder als Diebstahlsicherung, darüber hinaus bevorzugt unter Nutzung einer Benutzerkontenverwaltung zur auf unterschiedliche Anwender zugeschnittenen Freigabe von favorisierten Rezepten und/oder Touch-Display-Design und/oder Sprachauswahl. Entsprechend bevorzugt sind favorisierte Rezepte und/oder die Sprache und/oder ein- bzw. auszuschließende Lebensmittel benutzerdefiniert abspeicherbar. Die Benutzererkennung erfolgt bevorzugt über eine beliebig festlegbare Kombination von Stellelemente-Folgen unter Nutzung des Touch-Displays sowie der mechanisch zu betätigenden Schalter, wie bspw. Drehgeber und/oder Taster, weiter ggf. auch unter Einbeziehung des Ein-/Aus-Schalters. Das HMI ist hierbei immer aktiviert. Die Freigabe der Küchenmaschine erfolgt nach Eingabe des Codes. Der Anwender kann weiter im Menü Benutzerprofile, insbesondere sein dem Code zuzuordnendes Benutzerprofil hinterlegen und so bspw. Stellelementesperren, Rezepte für Nutzerprofile zuweisen, die Zeit nach Inbetriebnahme zur automatischen Zugangsbeschränkung nach einer vorgegebenen Zeit frei festlegen und auch bevorzugt die Zugriffsbeschränkung deaktivieren. Darüber hinaus kann auch der Zugang zu den Gerätefunktionen während eines laufenden Prozesses mit einer der oben genannten Zugangsbeschränkungen aktiv gesperrt oder entsperrt werden. Auch die Funktionen Heizung, Waage, Drehzahl sind bevorzugt auf einen vom Anwender festzulegenden Wert limitierbar und festlegbar.

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht (gerade) durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in Ansicht eine Küchenmaschine, eine erste Ausführungsform betreffend;
- Fig. 2: einen Vertikalschnitt durch eine Küchenmaschine, eine zweite Ausführungsform betreffend;
- Fig. 3: eine der Fig. 2 entsprechende Darstellung, betreffend eine dritte Ausführungsform.

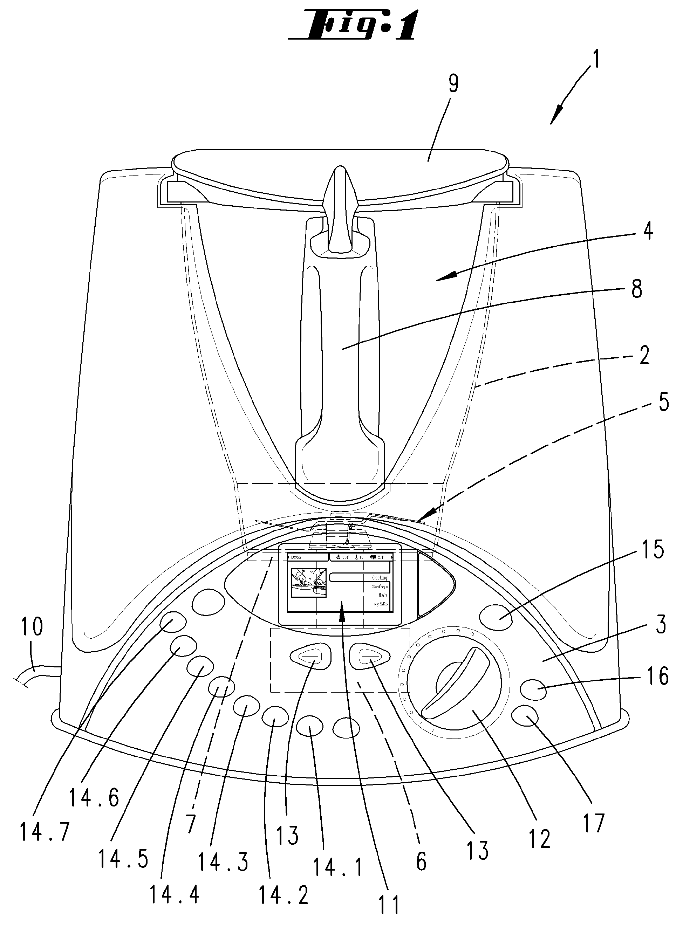

Dargestellt und beschrieben ist zunächst mit Bezug zu Fig. 1 eine Küchenmaschine 1 in einer ersten Ausführungsform mit einer Rührgefäß-Aufnahme 2 und einem Bedienfeld 3.

Der Küchenmaschine 1 ist ein Rührgefäß 4 zuordbar, in dem dieses in die Rührgefäß-Aufnahme 2 insbesondere im Fußbereich des Rührgefäßes 4 bevorzugt formschlüssig eingesetzt wird. In dem Rührgefäß 4 ist dem Rührgefäßboden 7 zugeordnet ein Rührwerk 5 vorgesehen, welches über einen in der Küchenmaschine 1 unterhalb der Rührgefäß-Aufnahme 2 angeordneten, in der Zeichnung lediglich schematisch dargestellten Elektromotor 6 betrieben wird. Das Rührwerk verbleibt in dem Rührgefäß 4 auch bei Entnahme desselben aus der Rührgefäß-Aufnahme 2, wozu weiter bevorzugt das Rührwerk 5 in der Zuordnungsstellung über eine drehfeste Steckkupplung mit dem Elektromotor 6 verbunden ist.

Der Boden 7 des Rührgefäßes 4 ist bevorzugt beheizbar zur Erhitzung eines in dem Rührgefäß 4 befindlichen Garguts. Bevorzugt kommt hier eine elektrische Widerstandsheizung zum Einsatz, welche in dem Boden 7 des Rührgefäßes 4 integriert ist.

Das Rührgefäß 4 ist bevorzugt topfartig mit im Wesentlichen kreisrundem Querschnitt ausgebildet, bei sich zur Topföffnung, d.h. nach oben hin konisch erweiterndem Querschnitt. Die Topfwandung besteht bevorzugt aus einem Metallwerkstoff.

Weiter weist das Rührgefäß 4 einen senkrecht ausgerichteten Haltegriff 8 auf, welcher sockelseitig sowie topfrandseitig an dem Rührgefäß 4 festgelegt ist.

Das Rührgefäß 4 wird der Küchenmaschine 1 bevorzugt derart zugeordnet, dass der Haltegriff 8 sich freistehend zwischen Gerätegehäuse-Backen, dem Bedienfeld 3 zugewandt, erstreckt, wobei der Sockelbereich des Rührgefäßes sich auf einem integralen Boden der Küchenmaschine 1 im Bereich der Aufnahme 2 abstützt, dies unter Kupplung von Rührwerksantrieb und Rührwerk 5 sowie bevorzugt elektrischer Kontaktierung der rührgefäßbodenseitigen Heizung und/oder weiterer in oder an dem Rührgefäß vorgesehener elektrischer Mittel.

Auf das Rührgefäß 4 wird ein Gefäßdeckel 9 aufgesetzt, welcher im Betrieb der Küchenmaschine 1, weiter insbesondere im Betrieb des Rührwerks 5 und/oder der bodenseitigen Heizung verriegelt ist, weiter bevorzugt an dem Gehäuse der Küchenmaschine 1. Zentral besitzt der Gefäßdeckel 9 eine nicht dargestellte Einfüllöffnung.

Die Elektroversorgung des Elektromotors 6 sowie der weiter bevorzugt rührgefäßbodenseitig vorgesehenen Heizung und darüber hinaus auch der elektrischen Steuerung der Gesamtküchenmaschine 1 ist über ein bevorzugt steckkuppelbares Netzanschlusskabel 10 erreicht.

In dem Bedienfeld 3 ist zunächst ein bevorzugt als Touchscreen ausgebildetes Display 11 vorgesehen. Weiter trägt das Bedienfeld 3 mechanische Schalter und Regler zum Einstellen unterschiedlicher Stellgrößen für den Betrieb der Küchenmaschine 1. So ist zunächst bevorzugt ein Drehschalter 12 vorgesehen, zur Einstellung der Drehzahl des Rührwerks 5, wobei bevorzugt über den Drehschalter 12 Rührwerkdrehzahlstufen angewählt werden, wobei jeder Rührwerkdrehzahlstufe eine vorgegebene Rührwerkdrehzahl zugeordnet ist.

In dem dargestellten Ausführungsbeispiel gemäß Fig. 1 bevorzugt unterhalb des Displays 11 sind zwei mechanische Schalter in Form von Tasten 13 vorgesehen, mittels welchen eine Zeitdauer als Stellgröße eingegeben werden kann, über welche Zeitdauer bevorzugt das Rührwerk 5 und/oder die bodenseitige Heizung des Rührgefäßes 4 aktiviert wird.

Darüber hinaus ist bevorzugt eine Reihe von mechanischen Schaltern in Form von Tasten 14.1 bis 14.7 vorgesehen, über welche unterschiedliche, vorgegebene Temperaturen wählbar sind, so weiter bevorzugt Temperaturen von 37°C bis hin zu 100°C. Mit der hierüber gewählten Temperatur und der ggf. über den Drehschalter 12 gewählten Rührwerkdrehzahl wird das sich in dem Rührgefäß 4 befindliche Gargut über den mittels der Tasten 13 vorgegebenen Zeitraum mit Wärme beaufschlagt.

Alternativ zu den Tasten 13 und 14.1 bis 14.7 kann eine Zeit- und/oder Drehzahleinstellung über jeweils einen kombinierten Dreh-Drücksteller erfolgen.

Zudem sind in dem Bedienfeld 3 bevorzugt weitere Tasten zum Aufrufen hinterlegter Sonderfunktionen vorgesehen, so insbesondere bevorzugt eine Taste 15 zur Aktivierung einer Turbofunktion, bei welcher kurzzeitig, d.h. bevorzugt über einen Zeitraum von 1 bis 3 Sekunden, weiter bevorzugt über einen dem Zeitraum der Tastenbeaufschlagung entsprechenden Zeitraum das Rührwerk 5 mit einer Höchstdrehzahl betrieben wird. So führt weiter bevorzugt die Turbofunktion zu einer kurzzeitigen Drehzahl des Rührwerks 5 von mehr als 10.000 U/min., weiter bevorzugt mehr als 12.000 U/min.

Eine weiter bevorzugte Taste 16 dient zur Aktivierung einer Richtungsumkehrfunktion für das Rührwerk 5. Dreht das Rührwerk 5 im üblichen Betrieb bevorzugt im Rechtslauf, so ist zufolge Betätigung der Taste 16 die Umschaltung auf einen Linkslauf ermöglicht, wobei weiter bevorzugt diese Drehrichtungsumkehr bis zum Ablauf des über die Tasten 13 vorgegebenen Zeitraumes beibehalten wird. Weiter bevorzugt schaltet die Elektronik der Küchenmaschine 1 selbsttätig in die Standard-Drehrichtung um. Auch ist durch eine nochmalige Betätigung der Taste 16 während des Rührwerkbetriebs eine erneute Drehrichtungsumkehr durchführbar.

Zum Weiteren ist bevorzugt eine Taste 17 vorgesehen, zur Aktivierung einer Teigrührfunktion, welche insbesondere bei der Herstellung schwerer Hefe- und Brotteige zur Anwendung kommt.

Die über den Drehschalter 12 sowie über die Tasten 13 bis 17 einzustellenden Stellgrößen bzw. aufzurufenden Funktionen sind bevorzugt in dem Display 11 anzeigbar.

Die vorbeschriebenen Funktionen, welche über die verschiedenen Schalter und Tasten ausgelöst bzw. aufgerufen werden können, sind in bevorzugter Ausgestaltung erst nach einer benutzerdefinierten Freischaltung möglich. Hierzu ist bevorzugt ein, weiter bevorzugt einem hinterlegten Benutzerprofil zugeordneter Code einzugeben, wozu das Display 11 sowie die Schalter und Tasten genutzt werden. Entsprechend ist nach einem Einschalten der Küchenmaschine 1 grundsätzlich das HMI (Human-Machine-Interface) aktiviert, um so die Code-Eingabe zu ermöglichen.

Der Code ist bevorzugt eingebbar unter Nutzung des Displays 11 sowie des Drehschalters 12 und/oder einer oder mehrerer der Tasten 13 bis 17, dies weiter bevorzugt in einer vorgegebenen Reihenfolge der Betätigung, wobei weiter bevorzugt alle oder auch nur einzelne der Schalter und/oder Taster der Code-Eingabe dienen.

Weiter bevorzugt dient das gesamte Display 11 zur Eingabe eines Teils des Codes, so dass entsprechend der Benutzer zur Eingabe dieses einen Teils des Codes das Display 11 wahllos berühren kann. In weiterer Ausgestaltung sind in dem Display Tastenfelder generiert, die im üblichen Betrieb der Küchenmaschine 1 bspw. zum Aufrufen von Rezepten und/oder weiterer Funktionen der Küchenmaschine 1 dienen, wobei weiter bevorzugt zur Code-Eingabe eines oder mehrere dieser generierten Tastenfelder des Displays zur Eingabe eines Teils des Codes berührt werden müssen. Sind hierbei mehrere Tastenfelder zur teilweisen Code-Eingabe zu betätigen, ist hierbei weiter auch bevorzugt die Reihenfolge der Tastenberührung codebedingt vorgegeben.

Bevorzugt ist neben der Nutzung des Displays 11 auch zumindest die Benutzung eines der Schalter und/oder Tasten zur Code-Eingabe erforderlich, entsprechend die Nutzung eines mechanischen Schalters der Küchenmaschine 1. Bei einem Drehschalter, wie bspw. dem Drehschalter 12 zur Rührwerk-Drehzahleinstellung, ist bevorzugt eine Code-Eingabe durch Drehstellen des Schalters auf eine Drehzahlstufe zur teilweisen Code-Eingabe nötig. Weiter alternativ ist alleine eine Drehbewegung des Schalters zur teilweisen Code-Eingabe ausreichend. Sind weiter bspw. mehrere der Tasten 14, die im Betrieb der Küchenmaschine 1 zur Temperaturvorgabe der Heizung dienen, zur Code-Eingabe erforderlich, ist hierbei weiter bevorzugt auch die Betätigungsreihenfolge maßgebend.

Nachfolgend sind drei exemplarische Beispiele zur Code-Eingabe aufgeführt, wobei die Eingabe durch Berühren (Display), Drücken (Tasten) oder durch Drehen (Drehschalter) erfolgt. Angegeben ist hierbei eine beispielhafte vierstellige Code-Eingabe. Darüber hinaus sind bevorzugt auch zwei-, dreistellige oder darüber hinaus auch fünf- bis zehnstellige Code-Eingaben möglich. Innerhalb einer Code-Eingabesequenz kann eine Taste oder der Drehschalter, weiter bevorzugt auch das Display, mehrfach berührt bzw. gedrückt oder gedreht werden.

### Beispiel 1:

Display 11 - Drehschalter 12 - Taste 17 (Teigrührschaltung) - Taste 13 (Zeit).

### Beispiel 2:

Taste 14.1 (Temperatur) - Taste 14.4 (Temperatur) - Display 11 - Drehschalter 12.

### Beispiel 3:

Taste 15 (Turbofunktion) - Display 11 - Drehschalter 12 - Display 11.

Jedem Code ist ein in der Küchenmaschine 1 hinterlegtes, weiter bevorzugt in einem nicht flüchtigen Speicher abgelegtes Benutzerprofil zugeordnet, so dass durch entsprechende Code-Eingabe bspw. eine Beschränkung des möglichen Drehzahlbereiches und/oder der möglichen Heiztemperatur ermöglicht ist, darüber hinaus eine Einschränkung über das Display 11 aufzurufender Rezepte und/oder eine Beschränkung auf eine Betriebsart aus einer Auswahl der mehreren Betriebsarten (Rühren, Heizen, Waagefunktion usw.).

Bevorzugt ist im Betrieb der Küchenmaschine 1 mit einer vorgegebenen Kombination der Betätigung von Display, Drehschalter und Tasten eine Aktivierung oder Änderung des Benutzerprofils vornehmbar.

Unabhängig von der Eingabe eines Codes ist die Küchenmaschine 1 oder zumindest der Elektromotor 6 des Rührwerks 5, weiter bevorzugt auch die Heizung deaktivierbar, so dass entsprechend auch zur Bedienung der Küchenmaschine 1 nicht befugte Benutzer bspw. bei auftretenden Problemen ein Ausschalten insbesondere der Küchenmaschine 1 bewirken können.

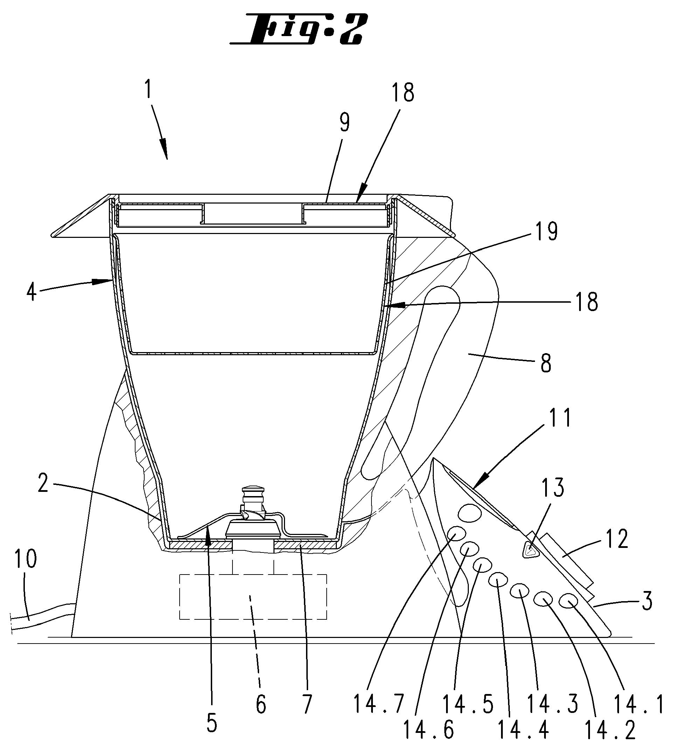

Weiter ist alternativ oder auch kombinativ mit einer wie vorbeschriebenen manuellen Code-Eingabe eine Codierung infolge Zuordnung von weiteren Gerätekomponenten 18 zu der Kücherunaschine 1 vorgesehen. Bezüglich der Gerätekomponente 18 handelt es sich insbesondere um den Gefäßdeckel 9 und/ oder um einen in das Rührgefäß 4 einzusetzenden, insbesondere einzuhängenden Gareinsatz 19. Eine solche Konfiguration mit Gefäßdeckel 9 und Gareinsatz 19 ist in Fig. 2 beispielhaft dargestellt. Die Gerätekomponenten 18 weisen eine durch die Küchenmaschine 1 erfassbare Codierung auf, bspw. in Form eines elektronisch erfassbaren Transponders, wobei weiter bevorzugt eine entsprechende Erfassungseinheit rührgefäßseitig oder auch unmittelbar küchenmaschinenseitig vorgesehen ist. Jede Gerätekomponente 18 weist eine eindeutige Codierung auf.

Mittels einer solchen Codierung ist bevorzugt die Betriebsart der Küchenmaschine 1 auf eine Anwendung mit den erfassten Gerätekomponenten 18 beschränkt. So ist weiter bspw. bei einer Konfiguration gemäß Fig. 2 die Einstellung einer hohen Drehzahl des Rührwerks 5 unterbunden, welche hohen Drehzahlen in der Regel zum Zerkleinern von Gargut genutzt werden, dies ohne Nutzen des Gareinsatzes 19. So ist weiter bevorzugt bei einer solchen Konfiguration der Turbomodus für das Rührwerk 5 unterbunden. Weiter bevorzugt werden bei einer derart erfassten Konstellation von Gerätekomponenten 18 displayseitig nur Rezepte aufgeführt, die mit einer solchen Gerätekomponenten-Konstellation herstellbar sind.

Allein durch Erfassen der Gerätekomponenten 18 ist eine Einschränkung der Betriebsarten bzw. die alleinige Freigabe nur einer oder mehrerer Betriebsarten ermöglicht. Weiter bevorzugt, insbesondere im Zusammenhang mit einer manuellen Code-Eingabe gemäß der anhand der Darstellung in Fig. 1 beschriebenen Ausführung ist durch Erfassen bestimmter Gerätekomponente 18 eine weitere Einschränkung als durch das Benutzerprofil vorgegeben ermöglicht.

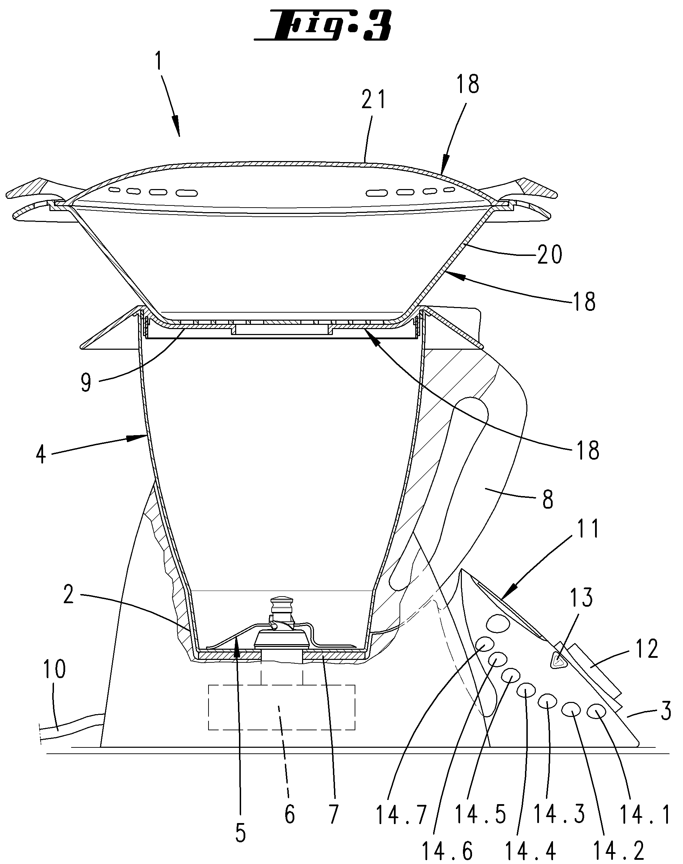

Fig. 3 zeigt eine weitere alternative Konstellation mit Gerätekomponenten 18, wobei auf dem Gefäßdeckel 9 Gerätekomponenten 18 in Form eines Garaufsatzes und eines diesen überdeckenden Garaufsatzdeckels 21 vorgesehen sind. Auch diese Gerätekomponenten 18 sind mit einer eindeutigen Codierung versehen, die bei entsprechender Erfassung durch die Küchenmaschine 1 insbesondere zu einer Einschränkung der Mehrzahl von möglichen Betriebsarten führt. So ist weiter bevorzugt bei Erfassen eines Garaufsatzes 20 die Betriebsart "Varoma" freigegeben, während weiter bevorzugt andere Betriebsarten, wie bspw. die Teigrührfunktion und/oder der Turbomodus, unterbunden sind. Weiter bevorzugt werden auf dem Display lediglich Rezepte angezeigt, die im Varoma-Verfahren zubereitet werden.

### Bezugszeichenliste

- 1: Küchenmaschine
- 2: Rührgefäß-Aufnahme
- 3: Bedienfeld
- 4: Rührgefäß
- 5: Rührwerk
- 6: Elektromotor
- 7: Rührgefäßboden
- 8: Haltegriff
- 9: Gefäßdeckel
- 10: Netzanschlusskabel
- 11: Display
- 12: Drehschalter
- 13: Taste
- 14: Taste
- 15: Taste
- 16: Taste
- 17: Taste
- 18: Gerätekomponente
- 19: Gareinsatz
- 20: Garaufsatz
- 21: Garaufsatzdeckel

## Patentansprüche

1. Verfahren zur benutzerdefinierten Freischaltung einer elektrischen Küchenmaschine (1), wobei zur Freischaltung ein Code einzugeben ist und die Küchenmaschine (1) ein Touch-Display (11) sowie mechanisch zu betätigende Schalter, wie Drehschalter (12) oder Taster (13 bis 17), aufweist, **dadurch gekennzeichnet, dass** der Code sowohl unter Nutzung des Touch-Displays (11) wie auch eines oder mehrerer Schalter eingegeben werden muss, wobei die Küchenmaschine (1) insgesamt oder ein Motor der Küchenmaschine (1) unabhängig von dem durch den eingegebenen Code gewählten Benutzerprofil deaktiviert werden kann.

2. Verfahren nach Anspruch 1, **dadurch gekennzeichnet, dass** die Küchenmaschine ein Rührwerk (5) mit einer einstellbaren Drehzahl und eine Heizeinrichtung mit einer einstellbaren Heiztemperatur und eine wählbare Zeiteinstellung aufweist und dass die benutzerdefinierte Einstellung jedenfalls eine Beschränkung des möglichen Drehzahlbereiches und/oder der möglichen Heiztemperatur beinhaltet.

3. Verfahren nach einem der vorhergehenden Ansprüche, **dadurch gekennzeichnet, dass** die Küchenmaschine (1) aus einem Speicher abrufbare Rezepte aufweist und dass das Benutzerprofil eine Beschränkung der abrufbaren Rezepte beinhaltet.

4. Verfahren nach einem der vorhergehenden Ansprüche, **dadurch gekennzeichnet, dass** ein Benutzerprofil eine Beschränkung auf eine Betriebsart aus einer Auswahl von mehreren Betriebsarten, bspw. auf eine Waagefunktion, beinhaltet.

5. Verfahren nach einem der vorhergehenden Ansprüche, **dadurch gekennzeichnet, dass** im Betrieb der Küchenmaschine (1) mit einer gewählten Kombination aus Heizungs- und/oder Drehzahleinstellung und/oder Zeitvorwahl eine Aktivierung oder Änderung des Benutzerprofils vorgenommen werden kann.

## Claims

1. Method for the user-defined activation of an electric kitchen appliance (1), it being necessary to enter a code for the activation and the kitchen appliance (1) comprising a touch display (11) and a mechanically operable switch, such as a rotary switch (12) or push button (13 to 17), **characterised in that** the code must be entered by using both the touch display (11) and one or more switches, it being possible to completely deactivate the kitchen appliance (1) or to deactivate a motor of the kitchen appliance (1) independently of the user profile selected by the code entered.

2. Method according to claim 1, **characterised in that** the kitchen appliance comprises a mixer (5) having an adjustable speed and a heating device having an adjustable heating temperature and a selectable time setting, and **in that** the user-defined setting contains in any case a restriction of the possible speed range and/or the possible heating temperature.

3. Method according to either of the preceding claims, **characterised in that** the kitchen appliance (1) comprises recipes that can be retrieved from a memory and **in that** the user profile contains a restriction of the recipes that can be retrieved.

4. Method according to any of the preceding claims, **characterised in that** a user profile contains a restriction on an operating mode from a selection of a plurality of operating modes, for example on a scale function.

5. Method according to any of the preceding claims, **characterised in that** the user profile can be activated or modified when operating the kitchen appliance (1) with a selected combination of heating setting and/or speed setting and/or preset time.

## Revendications

1. Procédé d'activation personnalisée d'un robot de cuisine (1), dans lequel un code doit être introduit aux fins d'activation et le robot de cuisine (1) présente un écran tactile (11), ainsi que des interrupteurs à actionnement mécanique tel que des commutateurs rotatifs ou des boutons (13 à 17), **caractérisé en ce que** le code doit être introduit en utilisant aussi bien l'écran tactile (11) qu'un ou plusieurs interrupteurs, dans lequel le robot de cuisine (1) dans son ensemble ou un moteur du robot de cuisine (s) est susceptible d'être désactivé indépendamment du profil utilisateur sélectionné de par le code introduit.

2. Procédé selon la revendication 1, **caractérisé en ce que** le robot de cuisine présente un élément mélangeur (5) ayant une vitesse de rotation réglable et un dispositif de chauffage ayant une température de chauffe réglable et une durée sélectionnable et que le réglage personnalisé comprend une restriction de l'intervalle de vitesse de rotation possible et/ou de la température de chauffe possible.

3. Procédé selon l'une des revendications précédentes, **caractérisé en ce que** le robot de cuisine (1) comprend des recettes susceptibles d'être recherchées dans une mémoire et que le profil utilisateur contient une restriction sur les recettes susceptibles d'être recherchées.

4. Procédé selon l'une des revendications précédentes, **caractérisé en ce qu'**un profil utilisateur contient une restriction à un mode de fonctionnement parmi un choix de plusieurs modes de fonctionnement, par exemple à une fonction de pesage.

5. Procédé selon l'une des revendications précédentes, **caractérisé en ce qu'**il est possible d'activer ou de modifier le profil utilisateur en cours de fonctionnement du robot de cuisine (1) avec une combinaison sélectionnée de réglage en température et/ou de vitesse de rotation et/ou de durée.
